(19) Europäisches Patentamt

European Patent Office

Office européen des brevets

(11) **EP 0 596 777 B1**

(12) **FASCICULE DE BREVET EUROPEEN**

(45) Date de publication et mention
de la délivrance du brevet:
**02.02.2000 Bulletin 2000/05**

(51) Int. Cl.$^7$: **H04B 7/01**

(21) Numéro de dépôt: **93402647.7**

(22) Date de dépôt: **28.10.1993**

(54) **Dispositif de correction d'un décalage de fréquence dû à l'effet doppler dans un système de transmission**

Verfahren zur Korrektur einer Frequenzverschiebung verursacht durch Dopplereffekt in einer Übertragungsanordnung

Device for correction of frequency offset due to Doppler effect in a transmission system

(84) Etats contractants désignés:
**AT BE DE ES FR GB IT NL SE**

(30) Priorité: **03.11.1992 FR 9213156**

(43) Date de publication de la demande:
**11.05.1994 Bulletin 1994/19**

(73) Titulaire: **ALCATEL**
**75008 Paris (FR)**

(72) Inventeur: **Gourgue, Frédéric**
**F-75017 Paris (FR)**

(74) Mandataire:
**El Manouni, Josiane et al**
**COMPAGNIE FINANCIERE ALCATEL**
**Dépt. Propr. Industrielle**
**30, avene Kléber**
**75116 Paris (FR)**

(56) Documents cités:
**EP-A- 0 337 269**      **US-A- 4 019 138**

## Description

La présente invention concerne un dispositif de correction d'un décalage de fréquence dû à l'effet Doppler dans un système de transmission.

Dans les systèmes de transmission considérés, un émetteur transmet un signal à destination d'un récepteur, ces deux éléments étant en mouvement relatif. Il en est ainsi, par exemple, dans un système de transmission par satellite lorsque l'émetteur ou le récepteur placé dans un satellite est en communication avec un équipement terrestre, pour autant que ce satellite soit mobile par rapport à la terre, c'est-à-dire qu'il ne soit pas en orbite géostationnaire. Le signal transmis qui se présente sous la forme d'une onde porteuse modulée est soumis à l'effet Doppler, phénomène connu de l'homme du métier qui ne nécessite donc pas de développement supplémentaire. Il en résulte un décalage de fréquence sur l'onde porteuse selon qu'elle est mesurée à l'émetteur ou au récepteur. Ce décalage, vu du récepteur qui en ignore l'existence, se traduit par un déplacement apparent de la fréquence de l'onde porteuse sur laquelle ce récepteur doit s'accorder, ce qui a pour effet de dégrader la qualité du signal transmis. Il est donc nécessaire de corriger ce décalage de fréquence. Tant que celui-ci reste limité, un dispositif classique d'asservissement de fréquence présent dans le récepteur tel qu'une boucle à verrouillage de phase permet une correction efficace (on peut se référer par exemple aux documents US-A-4 019 138 ou EP-A-0 337 269) . Par contre, lorsque le décalage de fréquence est important, ce qui est le cas notamment dans les systèmes de radiocommunications par satellite, le dispositif connu nécessaire à la correction est nettement plus complexe et, partant, plus coûteux; on citera à titre d'exemple la double boucle à verrouillage de phase dont l'homme du métier connaît la difficulté de mise au point.

La présente invention à ainsi pour but un dispositif de correction d'un décalage de fréquence dû à l'effet Doppler qui s'adapte dans un système de transmission où le récepteur est prévu pour compenser des variations limitées de la fréquence de l'onde porteuse. Pour la clarté de l'exposé, on assimilera maintenant l'onde porteuse et le signal transmis.

Le dispositif de correction d'un décalage de fréquence dû à l'effet Doppler s'applique dans un système de transmission où un signal est transmis dans un lobe d'émission entre un émetteur et un récepteur en mouvement relatif. Le décalage de fréquence qui est la différence entre les fréquences du signal transmis mesurées au récepteur et à l'émetteur se présente comme la somme d'une fréquence centrale caractéristique du lobe d'émission et d'une fréquence de position fonction de la position du récepteur dans le lobe d'émission. Selon l'invention, le dispositif comprend des moyens pour accorder le récepteur qui présente une fréquence d'accord de sorte que cette fréquence d'accord soit égale à la somme de la fréquence émise et de la fréquence centrale.

Ainsi, le dispositif d'asservissement de fréquence du récepteur est considérablement simplifié.

De plus, de manière avantageuse, la fréquence centrale vaut sensiblement la demi-somme des valeurs extrêmes que peut prendre le décalage de fréquence dans le lobe d'émission.

Selon un premier mode de réalisation, les moyens pour accorder le récepteur imposent à l'émetteur une fréquence d'émission égale à la fréquence d'accord du récepteur diminuée de la fréquence centrale.

Le dispositif de correction étant donc disposé dans l'émetteur, le récepteur ne nécessite pas de moyens spécifiques.

Selon un deuxième mode de réalisation, les moyens pour accorder le récepteur lui imposent comme fréquence d'accord la fréquence d'émission de l'émetteur augmentée de la fréquence centrale.

Dans ce cas, les moyens de l'invention sont disposés non plus dans l'émetteur mais dans le récepteur.

Selon un troisième mode de réalisation, les moyens pour accorder le récepteur se composent d'un premier module disposé dans l'émetteur et d'un deuxième module disposé dans le récepteur, l'un de ces modules au moins présentant une capacité de correction inférieure à la fréquence centrale, le système de transmission étant prévu pour répartir la correction du décalage de fréquence entre ces deux modules.

Dans ce cas, les moyens de l'invention sont partagés entre l'émetteur et le récepteur et, d'ailleurs, l'invention vise séparément chacun de ces modules.

En outre, l'invention s'applique également dans un équipement prévu pour une communication bidirectionnelle au moyen d'un signal pour chaque sens de communication. Un tel équipement comprend un dispositif comme précisé ci-dessus pour chacun de ces signaux.

L'invention apparaîtra de manière plus précise dans le cadre de la description de modes de réalisation donnés à titre d'exemple en référence aux figures annexées qui représentent:

-   la figure 1, un repère lié à un satellite dans lequel figure un équipement terrestre,
-   la figure 2, la projection de plusieurs lobes d'émission correspondant à divers émetteurs situés dans le satellite.

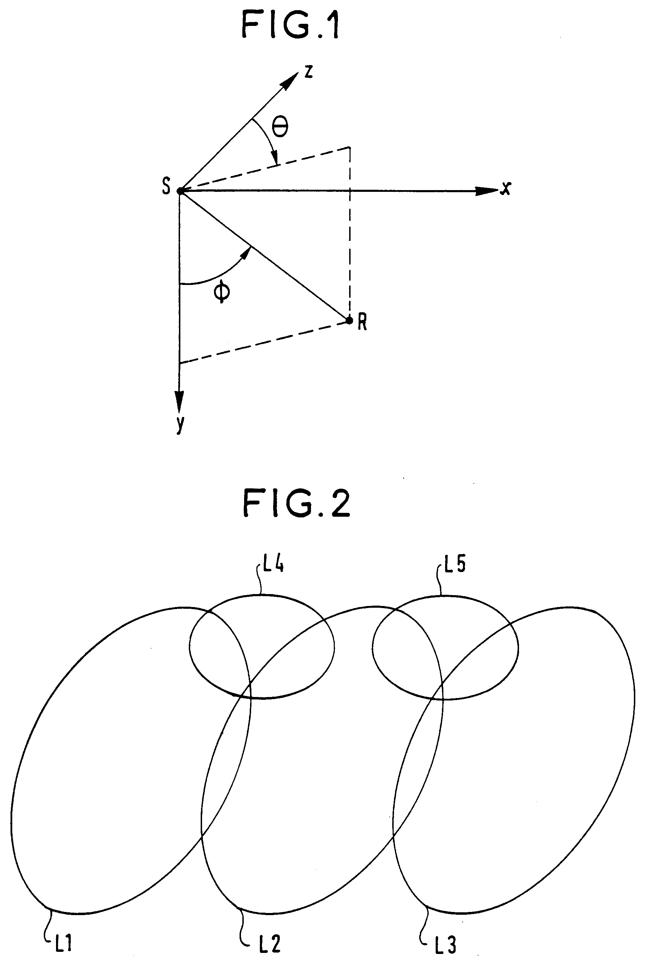

On considère dans un premier temps qu'un satellite S est pourvu d'un émetteur qui émet un signal radio à destination d'un récepteur R intégré dans un équipement terrestre. On peut alors définir, comme représenté dans la figure 1, un repère orthogonal lié au satellite Sxyz où l'axe Sx donne le sens de déplacement du satellite, l'axe Sy représente la verticale dirigée vers le centre de la terre et, par conséquent, l'axe Sz est la normale au plan Sxy de sorte que le repère ainsi formé soit un trièdre direct. La droite SR reliant le satellite au récepteur est alors complètement définie au moyen de deux angles, le premier angle $\Theta$ entre Sz et la projection de SR sur le plan Szx et le deuxième angle $\Phi$ entre Sy et SR.

Un signal transmis par le satellite S, est soumis au niveau du récepteur à un décalage en fréquence $\Delta f$ qui est déterminé par la fréquence du signal émis $f_e$, la vitesse du satellite et les deux angles $\Theta$, $\Phi$ identifiant la droite SR. Ainsi la fréquence du signal reçu $f_r$ est la somme de la fréquence du signal émis $f_e$ et du décalage de fréquence $\Delta f$ :
$f_r = f_e + \Delta f$.

Par ailleurs, on convient couramment de nommer lobe d'émission la zone de couverture d'un émetteur, c'est-à-dire l'ensemble des points de l'espace où un récepteur peut recevoir le signal transmis par cet émetteur. Il apparaît ainsi que pour un lobe d'émission donné le décalage de fréquence $\Delta f$ varie dans un intervalle borné par une valeur minimale $\Delta f_{min}$ et une valeur maximale $\Delta f_{max}$.

Ces deux valeurs extrêmes dépendent uniquement du système de transmission, à savoir la fréquence du signal transmis, la vitesse du satellite et le lobe d'émission défini comme une fonction des angles $\Theta$ et $\Phi$ précédemment identifiés; elles ne dépendent pas de la position du récepteur dans le lobe d'émission.

On peut définir une grandeur caractéristique du lobe d'émission, grandeur égale à la demi-somme des valeurs extrêmes $\Delta f_{min}$ et, $\Delta f_{max}$ du décalage de fréquence. Cette grandeur elle aussi dépend uniquement du système de transmission et l'invention consiste précisément à supprimer son effet en décalant l'émetteur ou le récepteur d'une fréquence équivalente à cette grandeur. Dans la pratique, on choisira une fréquence centrale $f_c$ qui, pour diverses raisons, ne sera peut-être pas exactement égale à la demi-somme des valeurs extrêmes $\Delta f_{min}$, $\Delta f_{max}$, mais qui en sera proche. En effet, il faut souvent satisfaire à certaines contraintes techniques, ne serait-ce qu'au pas de quantification d'un synthétiseur de fréquence, par exemple. Le point important est que cette fréquence centrale $f_c$ caractéristique du lobe d'émission permette de réduire au minimum la correction de fréquence nécessaire pour toutes les positions du récepteur dans ce lobe. Autrement dit, le décalage de fréquence $\Delta f$ peut s'analyser comme la somme d'une fréquence centrale $f_c$ indépendante du récepteur et d'une fréquence de position $f_p$ fonction de la position du récepteur dans le lobe d'émission, la fréquence centrale étant choisie de sorte que la correction qui porte sur la seule fréquence de position $f_p$ soit la plus réduite possible:

$$\Delta f = f_c + f_p$$

Selon un premier mode de réalisation, le décalage de fréquence est corrigé dans l'émetteur. Le récepteur étant prévu pour recevoir un signal à une fréquence d'accord $f_a$, le signal transmis est émis à une fréquence d'émission $f_e$ égale à la fréquence d'accord $f_a$ diminuée de la fréquence centrale $f_c$:

$$f_e = f_a - f_c$$

Il s'ensuit que la fréquence de réception fr vaut:

$$f_r = f_a + f_p$$

L'erreur à corriger sur la fréquence est bien limitée à la fréquence de position $f_p$ qui elle aussi évolue entre deux bornes $f_{pmin}$, $f_{pmax}$.

L'invention s'applique naturellement dans le cas général où le satellite comporte plusieurs émetteurs associés chacun à un lobe d'émission.

A titre d'exemple, un satellite d'une altitude de l'ordre de 1300 kms émettant à une fréquence voisine de 1,5 GHz produit au moyen de cinq émetteurs, cinq lobes d'émission L1, L2, L3, L4, L5 dont la projection sur la surface terrestre est schématisée dans la figure 2. Les différentes données du système de transmission figurent dans le tableau suivant:

| lobe | $\Delta f_{min}$ | $\Delta f_{max}$ | $f_c$ | $f_{pmin}$ | $f_{pmax}$ |
|------|--------|--------|--------|--------|--------|
| L1 | -30kHz | -10kHz | -20kHz | -10kHz | +10kHz |
| L2 | -10kHz | +10kHz | 0 | -10kHz | +10kHz |
| L3 | +10kHz | +30kHz | +20kHz | -10kHz | +10kHz |

(suite)

| lobe | $\Delta f_{min}$ | $\Delta f_{max}$ | $f_c$ | $f_{pmin}$ | $f_{pmax}$ |
|------|------------------|------------------|-------|------------|------------|
| L4 | -15kHz | -3kHz | -9kHz | -6kHz | +6kHz |
| L5 | 0 | 18kHz | 9kHz | -9kHz | +9kHz |

Dans ce cas, un récepteur qui doit fonctionner dans l'un quelconque des lobes d'émission doit corriger un décalage s'étendant de $f_{pmin}$ à $f_{pmax}$ c'est-à-dire de -10kHz à + 10kHz tandis que sans le dispositif de l'invention le décalage à corriger s'étendrait de -30kHz à + 30kHz.

Il va sans dire que l'invention présente un intérêt seulement si la fréquence centrale fc est différente de zéro. Cependant, si cette fréquence peut être nulle, elle le sera seulement dans un lobe et il faut considérer le cas des autres lobes.

Jusqu'à présent il a été considéré que l'émetteur était dans le satellite et que le récepteur était dans un équipement terrestre. Par équipement terrestre on entend un équipement fixe ou mobile, comme un véhicule par exemple, pourvu que la vitesse de déplacement de cet équipement par rapport à la terre soit faible en comparaison de celle du satellite par rapport à la terre. Il va sans dire que la solution proposée est parfaitement symétrique et qu'elle s'applique si l'émetteur est dans l'équipement terrestre et le récepteur dans le satellite.

Selon un second mode de réalisation, le décalage de fréquence est corrigé non pas dans l'émetteur mais dans le récepteur. Le système de transmission est ainsi conçu que le récepteur connaisse la valeur de la fréquence centrale $f_c$ du lobe d'émission dans lequel il se trouve. Connaissant naturellement la fréquence d'émission $f_e$ du signal transmis, il calculera alors sa fréquence d'accord comme la somme de la fréquence d'émission $f_e$ et de la fréquence centrale $f_c$:

$$f_a = f_e + f_c$$

Le moyen de communiquer la fréquence centrale au récepteur est à la portée de l'homme du métier et ne sera pas plus développé. On précisera simplement que la fréquence centrale d'un lobe particulier aura pu être communiquée lors du séjour dans le lobe d'émission précédent ou bien qu'au début de la réception, le récepteur essaie de s'accorder avec différentes valeurs de la fréquence centrale jusqu'à ce qu'il en obtienne une qui permette l'accord.

Dans ce mode de réalisation également la solution est symétrique et s'applique que l'émetteur soit dans le satellite et le récepteur dans l'équipement terrestre ou bien que la disposition soit inversée.

De plus, l'invention s'applique également dans le cas général d'une communication bidirectionnelle, c'est-à-dire lorsqu'un équipement pourvu d'un émetteur et d'un récepteur est en communication respectivement avec un récepteur et un émetteur d'un autre équipement. L'effet Doppler affecte dans ce cas les signaux transmis par l'un et l'autre des équipements. Il faut donc prévoir un dispositif de correction de décalage de fréquence pour chaque signal transmis.

Une solution avantageuse consiste à disposer les deux dispositifs de correction dans le même équipement, ce qui permet de simplifier l'autre équipement en conséquence.

Il a été admis jusqu'à présent que le dispositif de correction de décalage de fréquence prenait la forme d'un module unique disposé soit dans l'émetteur , soit dans le récepteur. Il s'agit là d'une simple forme de présentation et non pas de la consistance de l'invention. En effet, pour les raisons les plus diverses, on peut tout à fait envisager que le dispositif de l'invention soit décomposé en deux modules complémentaires disposés le premier dans l'émetteur et le second dans le récepteur. Dans ce cas, chaque module doit se charger d'une partie de la correction de sorte que la correction globale corresponde toujours à la fréquence centrale.

On prendra pour exemple la configuration suivante. L'émetteur est disposé dans l'équipement terrestre et peut appliquer comme correction maximale une fréquence de modification $f_1$ au moyen du premier module. On peut alors décomposer la fréquence centrale $f_c$ à corriger comme la somme de cette fréquence de modification $f_1$ et d'une fréquence de compensation $f_2$ si toutefois la fréquence centrale est supérieure à la fréquence de modification.

Le système de transmission est ainsi prévu que si la fréquence centrale est inférieure à la fréquence de modification, il commande le premier module afin qu'il applique une correction égale à la fréquence centrale et, dans ce cas, le second module est inopérant. Par contre, si la fréquence centrale est supérieure à la fréquence de modification, le système de transmission commande le premier module de sorte qu'il applique un correction valant la fréquence de modification et le second module afin qu'il applique une correction valant la fréquence de compensation.

Pratiquement, on peut agencer le système de transmission pour qu'il requière dans tous les cas une correction égale à la fréquence centrale du premier module. Celui-ci présentant une plage de correction limitée, ne pourra, en tout état de cause appliquer une correction supérieure à la fréquence de modification. Ce point peut, par exemple, faire l'objet d'une spécification ou d'une noramlisation. Ainsi, le système de transmission connaissant la fréquence centrale et la fréquence de modification commandera le second module si celle-là est supérieure à celle-ci pour qu'il applique

4

une correction valant la fréquence de compensation, alors que dans le cas contraire il ne requièrera aucune correction de la part du second module.

Cet agencement donné à simple titre d'exemple établit bien qu'il est possible de répartir le dispositif de correction pour partie dans l'émetteur et pour partie dans le récepteur. Cette solution peut présenter un intérêt notamment si l'émetteur présente une capacité de correction limitée, ceci pour satisfaire à des contraintes d'encombrement, de coût, ou de toute autre nature.

## Revendications

1. Dispositif de correction d'un décalage de fréquence dû à l'effet Doppler dans un système de transmission où un signal est transmis dans un lobe d'émission entre un émetteur (S) et un récepteur (R) en mouvement relatif, ledit décalage de fréquence ( f) qui est la différence entre les fréquences dudit signal transmis mesurées audit récepteur ($f_r$) et audit émetteur ($f_e$) se présentant comme la somme d'une fréquence centrale ($f_c$) caractéristique dudit lobe d'émission et d'une fréquence de position ($f_p$) fonction de la position dudit récepteur (R) dans ledit lobe d'émission, comprenant des moyens pour accorder ledit récepteur (R) qui présente une fréquence d'accord ($f_a$) de sorte que cette fréquence d'accord ($f_a$) soit égale à la somme de ladite fréquence émise ($f_e$) et de ladite fréquence centrale ($f_c$), la fréquence centrale ($f_c$) étant choisie de sorte que la correction qui porte sur la seule fréquence de position ($f_p$) soit la plus réduite possible .

2. Dispositif selon la revendication 1, caractérisé en ce que ladite fréquence centrale ($f_c$) vaut sensiblement la demi-somme des valeurs extrêmes que peut prendre ledit décalage de fréquence ( f) dans ledit lobe d'émission.

3. Dispositif selon l'une quelconque des revendications 1 ou 2, caractérisé en ce que les moyens pour accorder ledit récepteur (R) imposent audit émetteur (S) une fréquence d'émission ($f_e$) égale à la fréquence d'accord ($f_a$) dudit récepteur (R) diminuée de ladite fréquence centrale ($f_c$).

4. Dispositif selon l'une quelconque des revendications 1 ou 2, caractérisé en ce que les moyens pour accorder ledit récepteur (R) lui imposent comme fréquence d'accord ($f_a$) la fréquence d'émission ($f_e$) dudit émetteur (S), augmentée de ladite fréquence centrale ($f_c$).

5. Dispositif selon l'une quelconque des revendications 1 ou 2, caractérisé en ce que les moyens pour accorder ledit récepteur (R) se composent d'un premier module disposé dans ledit émetteur (S) et d'un deuxième module disposé dans ledit récepteur (R), lesdits modules présentant une capacité de correction inférieure à ladite fréquence centrale ($f_c$), ledit système de transmission étant prévu pour répartir ladite correction du décalage de fréquence entre ces deux modules.

6. Dispositif selon l'une quelconque des revendications 1 à 5, caractérisé en ce qu'il est placé dans un équipement de radiocommunication mobile par satellite.

7. Dispositif selon la revendication 5, caractérisé en ce que ledit premier module est placé dans un équipement de radiocommunication mobile par satellite.

8. Dispositif selon la revendication 5, caractérisé en ce que ledit deuxième module est placé dans un équipement de radiocommunication mobile par satellite.

9. Equipement pour une communication bidirectionnelle au moyen d'un signal pour chaque sens de communication comprenant un dispositif selon l'une quelconque des revendications 1 ou 2 pour chacun de ces signaux.

## Claims

1. A device for correcting a frequency shift due to the Doppler effect in a transmission system where a signal is transmitted in a transmission lobe between a transmitter (S) and a receiver (R) in relative motion, said frequency shift ($\Delta f$) which is the difference between the frequency of said transmitted signal as measured at said receiver ($f_r$) and as measured at said transmitter ($f_e$) being presented as the sum of a center frequency ($f_c$) characteristic of said emission lobe plus a position frequency ($f_p$) which is a function of the position of said receiver (R) in said transmission lobe, the device comprising means for tuning said receiver (R) which has a tuning frequency ($f_a$) such that said tuning frequency ($f_a$) is equal to the sum of said transmitted frequency ($f_e$) and of said center frequency ($f_c$), with the center frequency ($f_c$) being selected in such a manner that the correction which is applied to the position fre-

quency ($f_p$) only is as small as possible.

2. A device according to claim 1, characterized in that said center frequency ($f_c$) is substantially equal to one-half of the sum of the extreme values that said frequency shift ($\Delta f$) can take in said transmission lobe.

3. A device according to claim 1 or 2, characterized in that the means for tuning said receiver (R) impose a transmission frequency ($f_e$) on said transmitter (S) equal to the tuning frequency ($f_a$) of said receiver (R) minus said center frequency ($f_c$).

4. A device according to claim 1 or 2, characterized in that the means for tuning said receiver (R) set the tuning frequency ($f_a$) of the receiver (R) as the transmission frequency ($f_e$) of said transmitter (S) plus said center frequency ($f_c$).

5. A device according to claim 1 or 2, characterized in that the means for tuning said receiver (R) comprise a first module disposed in said transmitter (S) and a second module disposed in said receiver (R), said modules having correction capacity that is less than said center frequency ($f_c$), said transmission system being designed to share said frequency shift correction between said two modules.

6. A device according to any one of claims 1 to 5, characterized in that it is placed in mobile equipment for radiocommunication by satellite.

7. A device according to claim 5, characterized in that said first module is placed in mobile equipment for radiocommunication by satellite.

8. A device according to claim 5, characterized in that said second module is placed in mobile equipment for radiocommunication by satellite.

9. Equipment for two-way communication by means of a signal in each communication direction, the equipment comprising a device according to claim 1 or 2 for each of said signals.

**Patentansprüche**

1. Vorrichtung zur Korrektur einer Frequenzverschiebung aufgrund des Doppler-Effekts in einer Übertragungsanordnung, in der ein Signal in einer Sendekeule zwischen einem Sender (S) und einem Empfänger (R) in relativer Bewegung übertragen wird, wobei sich die Frequenzverschiebung ($f$), die die Differenz zwischen den am Empfänger ($f_r$) und am Sender ($f_e$) gemessenen Frequenzen des übertragenen Signals ist, als die Summe einer charakteristischen Mittenfrequenz ($f_c$) der Sendekeule und einer Positionsfrequenz ($f_p$), die von der Position des Empfängers (R) in der Sendekeule abhängt, zeigt, die Mittel zum Einstellen des Empfängers (R), der eine Einstellfrequenz ($f_a$) aufweist, umfasst, so dass diese Einstellfrequenz ($f_a$) gleich der Summe der gesendeten Frequenz ($f_e$) und der Mittenfrequenz ($f_c$) ist, wobei die Mittenfrequenz ($f_c$) so gewählt wird, dass die Korrektur, die nur die Positionsfrequenz ($f_p$) betrifft, so klein wie möglich ist.

2. Vorrichtung nach Anspruch 1, dadurch gekennzeichnet, dass die Mittenfrequenz ($f_c$) im Wesentlichen die Hälfte der Summe der Extremwerte beträgt, die die Frequenzverschiebung ($f$) in der Sendekeule annehmen kann.

3. Vorrichtung nach einem der Ansprüche 1 oder 2, dadurch gekennzeichnet, dass die Mittel zum Einstellen des Empfängers (R) dem Sender (S) eine Sendefrequenz ($f_e$) gleich der Einstellfrequenz ($f_a$) des Empfängers (R), um die Mittenfrequenz ($f_c$) verringert, auferlegen.

4. Vorrichtung nach einem der Ansprüche 1 oder 2, dadurch gekennzeichnet, dass die Mittel zum Einstellen des Empfängers (R) ihm als Einstellfrequenz ($f_a$) die Sendefrequenz ($f_e$) des Senders (S), um die Mittenfrequenz ($f_c$) erhöht, auferlegen.

5. Vorrichtung nach einem der Ansprüche 1 oder 2, dadurch gekennzeichnet, dass die Mittel zum Einstellen des Empfängers (R) aus einem ersten Modul, das im Sender (S) angeordnet ist, und einem zweiten Modul bestehen, das im Empfänger (R) angeordnet ist, wobei die Module eine Korrekturkapazität unterhalb der Mittenfrequenz ($f_c$) aufweisen, wobei die Übertragungsanordnung dafür vorgesehen ist, die Korrektur der Frequenzverschiebung unter diesen beiden Modulen aufzuteilen.

6. Vorrichtung nach einem der Ansprüche 1 bis 5, dadurch gekennzeichnet, dass es in einer beweglichen Ausrüstung zur Funkkommunikation über Satellit angeordnet ist.

7. Vorrichtung nach Anspruch 5, dadurch gekennzeichnet, dass das erste Modul in einer beweglichen Ausrüstung zur Funkkommunikation über Satellit angeordnet ist.

8. Vorrichtung nach Anspruch 5, dadurch gekennzeichnet, dass das zweite Modul in einer beweglichen Ausrüstung zur Funkkommunikation über Satellit angeordnet ist.

9. Ausrüstung für eine bidirektionale Kommunikation mittels eines Signals für jede Kommunikationsrichtung, die für jedes dieser Signale eine Vorrichtung nach einem der Ansprüche 1 oder 2 umfasst.

# FIG.1

# FIG.2